# EUROPÄISCHE PATENTSCHRIFT

(11) **EP 1 964 602 B1**
(45) Veröffentlichungstag und Bekanntmachung des Hinweises auf die Patenterteilung: **31.08.2011**
(21) Anmeldenummer: 07004300.5
(22) Anmeldetag: 02.03.2007
(51) Int. Cl.: B01D 53/12, B01D 53/10, B01D 53/34

(54) **Verfahren zur Reinigung von Abgasen aus einer Müllverbrennungsanlage**
Method for cleaning exhaust gases in a waste incinerator plant
Procédé de nettoyage de gaz d'échappement dans une installation d'incinération de déchets

(43) Veröffentlichungstag der Anmeldung: 03.09.2008
(73) Patentinhaber: AE&E Inova AG, 8005 Zürich (CH)
(72) Erfinder: Morf, Philipp Oliver, 8048 Zürich (CH)
(74) Vertreter: Schaad, Balass, Menzl & Partner AG

(56) Entgegenhaltungen:
- EP-A2- 0 173 403
- DE-C1- 4 333 481
- US-A- 5 006 322

## Beschreibung

Die vorliegende Erfindung betrifft ein Verfahren zur Reinigung von Abgasen aus einer Müllverbrennungsanlage mittels eines Sorptionsverfahrens in einer zirkulierenden Wirbelschicht gemäss dem Oberbegriff des Anspruchs 1 sowie eine Abgasreinigungsanlage gemäss dem Oberbegriff des Anspruchs 9.

Bei der Müllverbrennung werden in der Regel die dabei entstehenden Abgase gereinigt, indem darin enthaltene Schadstoffe wie HCl, HF, SO₂, Stickoxide und Dioxin sowie Stäube in einer Abgasreinigungsanlage abgeschieden werden.

Ein mögliches Verfahren zur Abscheidung von Schadstoffen wie HCl, HF, SO₂ und Dioxine aus den Abgasen stellt die Trockensorption der Schadstoffe mittels eines Sorptionsmittels dar.

In der Regel wird dazu ein Sorptionsmittel in einen Wirbelschichtreaktor eingebracht, wo es in einer zirkulierenden Wirbelschicht mit dem Abgas in Kontakt gebracht wird. Dabei sorbieren die Schadstoffe am Sorptionsmittel. Dem Wirbelschichtreaktor ist ein Feststoffabscheider nachgeschaltet. In diesem wird im Abgas mitgeführter Feststoff und somit auch mit Schadstoff beladenes Sorptionsmittel abgeschieden. Der abgeschiedene Feststoff wird entweder ausgetragen oder zum Wirbelschichtreaktor zurückgeführt.

Ein entsprechendes Verfahren wird in der EP-A-1 537 905 beschrieben. Dabei erfolgt eine erste Zugabe des als Sorptionsmittel dienenden Additivs in die Wirbelschicht oder nach der Wirbelschicht vor der Abscheidung und eine zweite Zugabe vor der Wirbelschicht in einen zur Wirbelschicht führenden Abgaskanal.

Zur Regelung der zuzuführenden Menge des Sorptionsmittels sind die folgenden Verfahren vorgeschlagen worden:
JP-A-2000107562 beschreibt ein Verfahren zur Regelung der zuzugebenden Menge an absorbierendem Pulver durch Bestimmung der Rückwaschzyklen eines Schlauchfilters.
EP-A-0 173 403 beschreibt ein Verfahren zur Regelung der in einen Abgasstrom einzubringenden Sorptionsmittelmenge, bei dem der HCl-Wert als Führungsgrösse dient, aus der in Verbindung mit der gemessenen Abgasmenge und einem temperaturabhängigen Stöchiometriewert der Sollwert errechnet wird. Dabei kann der ebenfalls bestimmte SO₂-Gehalt als zusätzliche Korrektur aufgeschaltet werden. Aus dem Dokument geht nicht klar hervor, ob die HCl- und die SO₂-Konzentration des Rohgases oder des Reingases gemessen wird.

Ein Regelungsverfahren, in dem lediglich die HCl-Konzentration im Reingas gemessen wird ("Feedback"-Regelung), hat den Nachteil, dass eine erforderliche Sorptionsmittelzuführung erst dann erfolgt, wenn ein erhöhter Schadstoffgehalt im emittierten Reingas bereits festgestellt worden ist. Um diesem Nachteil zu begegnen, wurden Verfahren vorgeschlagen, in dem zusätzlich zur oben beschriebenen Messung im Reingas auch die HCl- und SO₂-Konzentrationen im Rohgas gemessen werden, anhand welcher die theoretisch benötigte Menge an Sorptionsmittel bestimmt werden kann (kombinierte "Feedforward/Feedback"-Regelung).

In diesem Zusammenhang wird etwa auf DE-C-43 33 481 verwiesen, die sich auf ein Verfahren zur Reinigung von Rauchgas aus der Abfallverbrennung bezieht, in welchem die Istwerte des Schadstoffgehalts des Rauchgases sowie dessen Volumenstroms vor der Reinigung bestimmt werden und die jeweilige Zugabemenge an Neutralisationsmittel festgelegt wird.

Allerdings hat sich gezeigt, dass über die gemessenen Konzentrationen von HCl und SO₂ die tatsächlich benötigte Menge an Sorptionsmittel nur ungenügend bestimmt werden kann. Dies hängt damit zusammen, dass der zirkulierende Feststoff, der nebst dem eigentlichen Sorptionsmittel weitere Feststoffkomponenten wie Flugasche oder Brennstoffpartikel umfasst, über eine nicht vernachlässigbare Restsorptionskapazität verfügt. Beispielsweise ist es möglich, dass bei einem relativ geringen Gehalt an Schadstoffen vor der Sorption, diese trotz Zuführung einer grossen Menge an frischem Sorptionsmittel nicht vollständig abgeschieden werden, da die Restsorptionskapazität des zirkulierenden Feststoffes gering ist und die zur Behandlung von Schadstoffspitzen erforderliche Menge an Sorptionsmittel dem System nicht genügend schnell zugeführt werden kann. Andrerseits ist es möglich, dass bei einer hohen Restsorptionskapazität des zirkulierenden Feststoffes die Zuführung von frischem Sorptionsmittel selbst dann gar nicht erforderlich ist, wenn der Schadstoffgehalt vor der Sorption relativ hoch ist. Die Restsorptionskapazität ist aufgrund der je nach Zusammensetzung des verbrannten Mülls stark variierenden Zusammensetzung des Abgases und der mitgeführten Feststoffe rechnerisch nicht zu bestimmen. Wird Kalkhydrat als Sorptionsmittel verwendet, so wird die Sorptionskapazität zudem durch Carbonatisierungsreaktionen beeinflusst, was eine rechnerische Bestimmung der Restsorptionskapazität gänzlich verunmöglicht.

Ein weiterer Nachteil der bestehenden Verfahren zur Reinigung von Abgasen einer Müllverbrennung liegt in ihrer mangelnden Betriebssicherheit. Diese ist darin begründet, dass der Chloridanteil des zirkulierenden Feststoffes stark schwankt und bei einem bestimmten Gehalt im Feststoff zu Verklebungen und Anbackungen führt, welche im Extremfall die Abgasreinigungsanlage komplett verstopfen können.

Aufgabe der vorliegenden Erfindung ist es somit, ein Verfahren der eingangs genannten Art zur Verfügung zu stellen, in welchem das Sorptionsmittel optimal genutzt wird und welches gleichzeitig eine hohe Betriebssicherheit gewährleistet.

Die Aufgabe wird gelöst durch des Verfahren des Anspruchs 1. Vorteilhafte Ausführungsformen sind in den abhängigen Ansprüchen definiert.

Das erfindungsgemässe Verfahren ist dadurch gekennzeichnet, dass der Massenstrom des frischen zugeführten Sorptionsmittels in Abhängigkeit der Konzentration von frischem Sorptionsmittel und/oder mindestens einem sorbierten Schadstoff im rezirkulierten Feststoff geregelt wird.

Somit wird bei der Regelung der Zuführung von frischem Sorptionsmittel die Restsorptionskapazität des rezirkulierten Feststoffs berücksichtigt. Dies erlaubt eine wesentlich genauere Bestimmung des tatsächlich benötigten Massenstroms an frischem Sorptionsmittel als dies in den bisher bekannten Verfahren der Fall ist. Das Sorptionsmittel wird somit optimal ausgenutzt, wodurch dessen Verbrauch minimal gehalten werden kann.

Zudem kann gemäss dem Verfahren der vorliegenden Erfindung die Zuführung von frischem Sorptionsmittel derart geregelt werden, dass der Anteil an Chloriden während der Reinigung der Abgase permanent unter dem für die Verklebung der Feststoffpartikel kritischen Schwellenwert gehalten wird.

Dies trägt massgeblich zur Betriebssicherheit des Verfahrens bei.

Das Verfahren der vorliegenden Erfindung umfasst sowohl Trockensorptionsverfahren ("dry sorption") als auch Halbtrockensorptionsverfahren ("semi-dry sorption").

Das Sorptionsmittel liegt dabei in Form einer zirkulierenden Wirbelschicht (auch als "zirkulierendes Wirbelbett" bezeichnet) vor, welche dadurch zustande kommt, dass die im Abgas enthaltenen Feststoffpartikel einschliesslich das zugeführte Sorptionsmittel durch die aufwärtsgerichtete Strömung des Abgases in einen Fliesszustand versetzt werden.

Vorzugsweise wird für das Verfahren der vorliegenden Erfindung Kalkhydrat (Ca(OH)₂) als Sorptionsmittel verwendet. Dieses weist in der Regel einen Reinheitsgrad von mindestens 92% und eine spezifische Oberfläche von mindestens 15 m²/g auf. Allerdings ist eine Vielzahl weiterer Sorptionsmittel wie Natriumbicarbonat (NaHCO₃), Spongiacal® (Rheinkalk) oder Sorbalit® (Märker Umwelttechnik GmbH) denkbar. Erfindungsgemäss kann ein einzelnes Sorptionsmittel oder eine Mischung verschiedener Sorptionsmittel verwendet werden.

Durch chemische Reaktion mit dem Sorptionsmittel in der zirkulierenden Wirbelschicht werden die im Abgas enthaltenen Schadstoffe abgeschieden.

Wird Kalkhydrat als Sorptionsmittel verwendet, reagieren die Schadstoffe SO₂, HCl und HF gemäss den folgenden Reaktionsgleichungen zu den entsprechenden Salzen:

Ca(OH)₂ + H₂O + SO₂ -> CaSO₃ (Calciumsulfit) + 2 H₂O

Ca(OH)₂ + 2 HCl -> CaCl₂ (Calciumchlorid) + 2 H₂O

Ca(OH)₂ + 2 HF -> CaF₂ (Calciumfluorid) + 2 H₂O

Die Temperatur für die Schadstoffabscheidung liegt dabei bevorzugt bei ca. 145°C.

In der Regel liegt in der zirkulierenden Wirbelschicht zudem Aktivkohle (Herdofenkoks) vor, an dem zusätzlich Schadstoffe adsorbiert und aus dem Abgas abgeschieden werden.

Nebst dem Sorptionsmittel und der Aktivkohle sowie den an Sorptionsmittel und Aktivkohle sorbierten Schadstoffen umfasst der rezirkulierte Feststoff im Allgemeinen auch Brennstoffpartikel und Flugasche aus dem Feuerungsteil der Müllverbrennungsanlage. Erfindungsgemäss wird der Massenstrom des zugeführten frischen Sorptionsmittels in Abhängigkeit der Konzentration von frischem Sorptionsmittel und/oder mindestens einem sorbierten Schadstoff geregelt.

In einer bevorzugten Ausführungsform des erfindungsgemässen Verfahrens wird die Konzentration der jeweiligen Komponente(n) im rezirkulierten Feststoff im Wesentlichen kontinuierlich bestimmt. Dabei wird die Konzentration von frischem (unbeladenem) Sorptionsmittel, insbesondere Kalkhydrat, und/oder von sorbiertem Schadstoff, insbesondere Chlorid, Sulfit und/oder Fluorid, bestimmt. Anhand der bestimmten Konzentration der jeweiligen Komponente(n) wird die Zuführung des frischen Sorptionsmittels eingestellt.

Durch die im Wesentlichen kontinuierliche Bestimmung der Konzentration mindestens einer Komponente im rezirkulierten Feststoff wird gewährleistet, dass möglichst rasch auf Systemänderungen reagiert werden kann.

In einer besonders bevorzugten Ausführungsform erfolgt die Bestimmung mittels eines Fourier-Transform-Nahinfrarot-Spektrometers (FT-NIR-Spektrometer). Dieses erlaubt eine kontinuierliche quantitative Analyse des rezirkulierten Feststoffes. Mittels einer in der Abgasreinigungsanlage angeordneten Sonde kann die Analyse *in situ* durchgeführt werden.

Alternativ zur Analyse *in situ* kann die Bestimmung der Konzentration der jeweiligen Komponente(n) anhand einer mittels eines kleinen Zyklons aus der Zirkulation entnommenen Feststoffprobe durchgeführt werden. Dabei erfolgt die Bestimmung chargenweise. Erfolgt die Probeentnahme in kurzen Zeitabschnitten, kann mit dieser Ausführungsform eine quasi-kontinuierliche Bestimmung durchgeführt werden.

Als Zyklon kann ein herkömmlicher Zyklon verwendet werden, wie er dem Fachmann beispielsweise aus Lueger, Lexikon der Technik, Stuttgart 1970, Bd. 16, S. 601f bekannt ist. Vorzugsweise wird die Feststoffprobe in einem automatisch entleerbaren Sammelbehälter gesammelt. Nach der erfindungsgemässen Bestimmung wird die Feststoffprobe automatisch zur Zirkulation zurückgeführt.

In einer weiteren bevorzugten Ausführungsform wird zusätzlich zum Massenstrom des frischen zugeführten Sorptionsmittels auch der Massenstrom des aus der Zirkulation ausgetragenen Feststoffs in Abhängigkeit der Konzentration von frischem Sorptionsmittel und/oder mindestens einem sorbierten Schadstoff im rezirkulierten Feststoff geregelt. Dadurch kann vermieden werden, dass Feststoff mit aufgebrauchter Sorptionskapazität weiterhin zirkuliert wird. In der Regel wird die Austragung des Feststoffes aus der Zirkulation mit einer dafür vorgesehenen Austragungsvorrichtung durchgeführt.

Im Weiteren ist es bevorzugt, dass der Massenstrom des frischen zugeführten Sorptionsmittels und wahlweise der Massenstrom des aus der Zirkulation ausgetragenen Feststoffs auch in Abhängigkeit der Konzentration von HCl und/oder SO₂ im Rohgas und im Reingas geregelt wird. Die Ausführungsform weist den Vorteil auf, dass damit direkt Information über die Schadstofffracht im Rohgas und im Reingas erhalten wird. Diese zusätzliche Information erlaubt im Weiteren eine Feinkorrektur der erfindungsgemässen Regelung des Massenstroms des frischen zugeführten Sorptionsmittels und wahlweise des Massenstroms des aus der Zirkulation ausgetragenen Feststoffs.

### Zudem können weitere Regelkreise vorliegen:

In einem ersten weiteren Regelkreis wird der Druckverlust über das Wirbelbett im Reaktor überwacht und der in den Wirbelschichtreaktor rezirkulierte Massenstrom an Feststoff kontinuierlich gesteuert, um ein konstantes Inventar an Bettmaterial im Wirbelschichtreaktor aufrechtzuerhalten.

In einem zweiten weiteren Regelkreis wird die Abgastemperatur im Wirbelschichtreaktor mittels Eindüsung von Wasser geregelt.

Nebst dem beschriebenen Verfahren betrifft die vorliegende Erfindung auch eine Abgasreinigungsanlage zur Reinigung von Abgasen aus einer Müllverbrennungsanlage mittels eines Sorptionsverfahren in einer zirkulierenden Wirbelschicht gemäss Anspruch 9.

Die Abgasreinigungsanlage der vorliegenden Erfindung umfasst sowohl Trockensorption-Abgasreinigungsanlagen oder Halbtrockensorption-Abgasreinigungsanlagen. Beispielhaft für eine Halbtrockensorption-Abgasreinigungsanlage sei der Turbosorp®-Reaktor (Austrian Energy & Environment/Von Roll Umwelttechnik AG) genannt.

Die erfindungsgemässe Abgasreinigungsanlage weist einen Wirbelschichtreaktor und Mittel zum Rückführen von Feststoff in den Wirbelschichtreaktor auf. Letztere liegen im Allgemeinen in Form eines herkömmlichen Feststoffabscheiders vor, wie er dem Fachmann bekannt ist.

Die Abgasreinigungsanlage ist dadurch gekennzeichnet, dass sie zudem Mittel zur Regulierung der Zuführung von frischem Sorptionsmittel in Abhängigkeit der Konzentration von frischem Sorptionsmittel und/oder mindestens einem sorbierten Schadstoff im rezirkulierten Feststoff aufweist.

In der Regel weist die Abgasreinigungsanlage dazu eine Analysevorrichtung zur Bestimmung der Konzentration von frischem Sorptionsmittel und/oder mindestens einem sorbierten Schadstoff im rezirkulierten Feststoff auf. Besonders bevorzugt handelt es sich dabei um ein FT-NIR-Spektrometer.

Weiter kann die Abgasreinigungsanlage der vorliegenden Erfindung einen Zyklon zur Entnahme von Proben des rezirkulierten Feststoffes für die Bestimmung der Konzentration mindestens einer seiner Komponenten aufweisen. In dieser Ausführungsform ist der Zyklon vorzugsweise an einem vom Wirbelschichtreaktor zum Feststoffabscheider führenden Verbindungskanal angeordnet.

Aufgrund des Umstandes, dass der Verbindungskanal frei von Anbackungen des Feststoffes ist, wird gewährleistet, dass die entnommene Feststoffprobe homogen ist. Die Analysevorrichtung ist in dieser Ausführungsform vorzugsweise mit dem Zyklon verbunden.

Um die Temperatur im Wirbelschichtreaktor konstant auf einem bestimmten Wert zu halten, können zusätzlich Mittel zur Eindüsung von Wasser vorgesehen sein. Je nach verwendetem Sorptionsmittel und je nach Schadstoffzusammensetzung kann die Temperatur derart variiert werden, dass die Sorption optimal ist. Vorzugsweise wird die Temperatur in der Abgasreinigungsanlage bei einem Wert von ca. 145°C gehalten.

Die erfindungsgemässen Abgasreinigungsanlage erlauben einen Volumenstrom von bis zu 200'000 mₙ³/h_{feucht} (mₙ³ = NormKubikmeter, wobei unter den Normbedingungen eine Temperatur von 273,15 K (0°C) und ein Druck von 101,3 kPa verstanden wird). Die Abgasreinigungsanlagen sind im Allgemeinen für Abgase mit einer Eintrittstemperatur von 170°C bis 300°C, insbesondere 180°C bis 250°C, ausgerichtet. Als Konditionierungsmittel wird in der Regel Betriebswasser verwendet. Die mittlere Stromgeschwindigkeit im Wirbelschichtreaktor der Abgasreinigungsanlage beträgt im Allgemeinen ca. 4 m/s. Der Druckabfall über die Abgasreinigungsanlage liegt im Allgemeinen bei 20 bis 25 mbar.

In der Regel sind die Abgasreinigungsanlagen für einen Betrieb zwischen 60 bis 110% Last der vorgeschalteten Feuerung ausgelegt.

In Tabelle 1 ist der Schadstoffgehalt eines beispielhaften Rohgases wiedergegeben, welches mit der Abgasreinigungsanlage gereinigt werden kann. Darin ist der Schadstoffgehalt als nominaler Tagesmittelwert und als maximaler Halbstundenmittelwert angegeben. Das beispielhafte Rohgas gemäss Tabelle 1 weist einen O₂-Gehalt von 11 Vol.-% und eine Feuchtigkeit von 30 Vol.-% H₂O auf.

**Tabelle 1**

| Schadstoffbestandteil | Nominaler Tagesmittelwert | Maximaler Halbstundenmittelwert |
|---|---|---|
| Staub | ≤ 4000 mg/mₙ³ | ≤ 10000 mg/mₙ³ |
| HCl | ≤ 3500 mg/mₙ³ | ≤ 4500 mg/mₙ³ |
| HF | ≤ 10 mg/mₙ³ | ≤ 25 mg/mₙ³ |
| SO₂ | ≤ 600 mg/mₙ³ | ≤ 1000 mg/mₙ³ |
| Hg | ≤ 0,25 mg/mₙ³ | ≤ 0,5 mg/mₙ³ |
| Cd und Tl | ≤ 1 mg/mₙ³ | ≤ 2,5 mg/mₙ³ |
| Dioxin | ≤ 5 ng/mₙ³ TEQ* | ≤ 12,5 ng/mₙ³ TEQ* |

| | | |
|---|---|---|
| *TEQ=Toxizitätsäquivalent | | |

Durch Reinigung des Rohgases in der erfindungsgemässen Abgasreinigungsanlage kann der Schadstoffgehalt des Reingases auf die in Tabelle 2 angegebenen Werte verringert werden.

**Tabelle 2**

| Schadstoffbestandteil | Nominaler Tagesmittelwert |
|---|---|
| Staub | ≤ 5 mg/mₙ³ |
| HCl | ≤ 10 mg/mₙ³ |
| HF | ≤ 1 mg/mₙ³ |
| SO₂ | ≤ 10 mg/mₙ³ |
| Hg | ≤ 0,03 mg/mₙ³ |
| Cd und Tl | ≤ 0,05 mg/mₙ³ |
| Sb, As, Pb, Cr, Co, Cu, Mn, Ni, V, Sn, Se, Te | ≤ 0,5 mg/mₙ³ |
| Dioxin | ≤ 0,1 ng/mₙ³ |

Bei optimalem Betrieb kann der Gehalt an HCl deutlich unter 10 mg/mₙ³ und der Gehalt an Staub auf 2 bis 3 mg/mₙ³ verringert werden.

Der mittlere Verbrauch an Kalkhydrat ist von den Rohgasfrachten der Schadstoffe und den einzuhaltenden Grenzwerten abhängig.

Die vorliegende Erfindung wird anhand der Figuren weiter erläutert.

Es zeigen rein schematisch:
- Fig. 1: eine Abgasreinigungsanlage umfassend einen Wirbelschichtreaktor und einen stromabwärts davon angeordneten Feststoffabscheider zur Durchführung des erfindungsgemässen Verfahrens und
- Fig. 2: die Abgasreinungsanlage gemäss Fig. 1, wobei zwischen Wirbelschichtreaktor und Feststoffabscheider ein in einem Ausschnitt vergrössert dargestellter Zyklon zur Entnahme einer Feststoffprobe angeordnet ist.

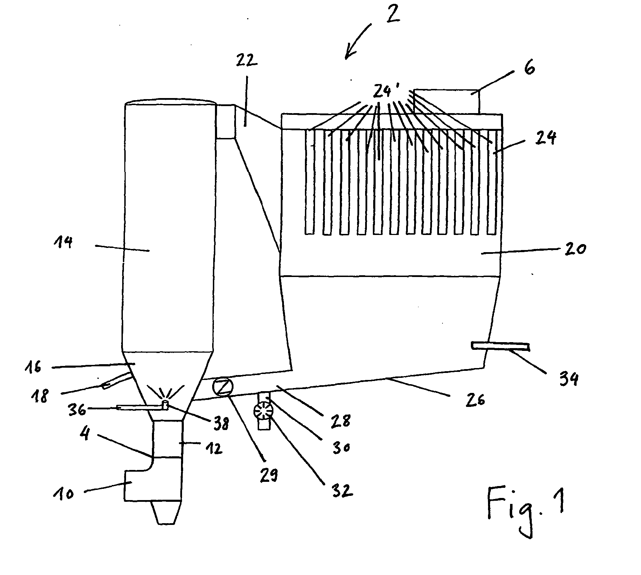

Die in Fig. 1 gezeigte Abgasreinigungsanlage 2 umfasst einen Rohgaseinlass 4, durch den das bei der Müllverbrennung gebildete Abgas einströmt, und einen Reingasauslass 6, durch den das gereinigte Abgas aus der Abgasreinigungsanlage 2 abgegeben wird. Der Rohgaseinlass 4 umfasst einen Einlassstutzen 10 und einen stromabwärts daran anschliessenden Einlasskanal 12 der in den Wirbelschichtreaktor 14 mündet. Der Wirbelschichtreaktor 14 weist im Wesentlichen die Form eines Hohlzylinders auf, welcher sich einlassseitig kegelförmig verjüngt. Im sich kegelförmig verjüngenden Bereich 16 ist eine Sorptionsmittelzuleitung 18 zur Eindüsung des Sorptionsmittels angeordnet. Das Sorptionsmittel wird vom von dem in den Wirbelschichtreaktor 14 einströmenden Abgas mitgenommen und bildet mit den im Abgasstrom von der Müllverbrennung mitgeführten Brennstoffpartikeln und der Flugasche eine zirkulierende Wirbelschicht (nicht gezeigt). Im oberen Bereich mündet der Wirbelschichtreaktor 14 in einen zum Feststoffabscheider 20 führenden Verbindungskanal 22. Der Feststoffabscheider 20 weist im oberen Bereich ein Filtersystem 24 zur Abscheidung der im Abgasstrom mitgeführten Feststoffpartikel auf. Das Filtersystem 24 besteht aus einer Vielzahl an Gewebefilterschläuchen 24'. Nach Passieren des Filtersystems 24 wird das erhaltene Reingas durch den Reingasauslass 6 emittiert. Die abgeschiedenen Feststoffpartikel sedimentieren am schräg nach unten verlaufenden Boden 26 des Feststoffabscheiders 20 und fliessen entlang des Bodens 26 in eine Feststoff-Rezirkulationsrinne 28. Die Feststoff-Rezirkulationsrinne 28 weist ein Dosierorgan 29 auf, über welches der Volumenstrom an in den Wirbelschichtreaktor 14 zurückgeführten Feststoff eingestellt werden kann. Vom Rückführkanal 28 zweigt ein Austragungskanal 30 ab, welcher über eine Fördereinrichtung 32 zum Austragen von Feststoff verfügt. Am Feststoffabscheider 20 ist eine Analysevorrichtung 34 zur Bestimmung der Konzentration mindestens eines Bestandteils im rezirkulierten Feststoff angeordnet. Je nach dem bei der Bestimmung erhaltenen Wert wird die Zuführung an Sorptionsmittel pro Zeiteinheit erhöht, verringert oder konstant gehalten.

Um zu gewährleisten, dass die Temperatur in der Abgasreinigungsanlage 2 einen vorgegebenen Wert nicht überschreitet, kann Wasser zur Kühlung in den Wirbelschichtreaktor eingedüst werden. Dazu weist der Wirbelschichtreaktor 14 unterhalb der Sorptionsmittelzuleitung 18 eine in den Wirbelschichtreaktor 14 führende Wasserzuleitung 36 mit einem Düsenkopf 38 auf.

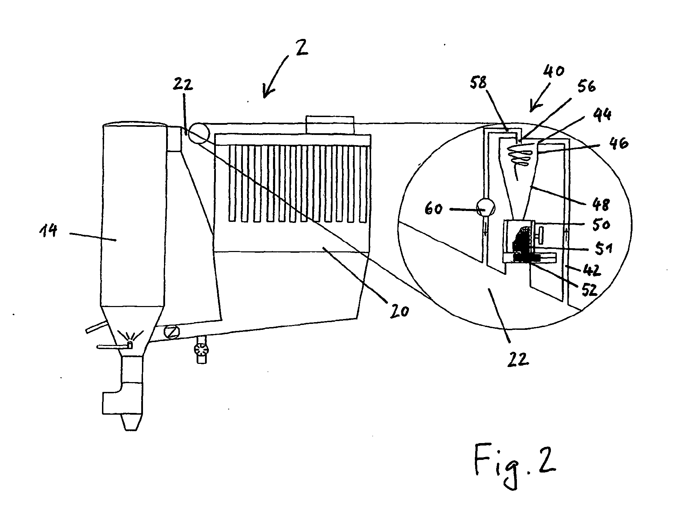

In der in Fig. 2 dargestellten Abgasreinigungsanlage 2 ist an dem zwischen dem Wirbelschichtreaktor 14 und dem Feststoffabscheider 20 angeordneten Verbindungskanal 22 ein Zyklon 40 zur Entnahme einer Probe des rezirkulierten Feststoffs angeordnet. Dabei wird die Probe durch einen Entnahmekanal 42 und einer an diesen anschliessende tangentiale Einlaufdüse 44 in den hohlzylindrischen Oberteil 46 des Zyklons 40 eingedüst. Aufgrund ihrer Masse werden die Feststoffpartikel infolge der Zentrifugalkraft auf Spiralbahnen zu einem sich konisch verjüngenden Unterteil 48 geführt, der in einen Sammelbehälter 50 mündet. Von der im Sammelbehälter 50 erhaltenen Feststoffprobe 51 wird die Konzentration mindestens einer Komponente mit einer entsprechenden Analysevorrichtung (nicht gezeigt) bestimmt. Diese Analysevorrichtung ist in der in Fig. 2 gezeigten Ausführungsform in der Regel mit dem Sammelbehälter 50 des Zyklons 49 verbunden. Der Sammelbehälter 50 weist einen Boden 52 auf, der derart verschoben werden kann, dass zwischen dem Sammelbehälter 50 und dem Verbindungskanal 22 ein Durchgang entsteht, durch den der Feststoff im Sammelbehälter 50 in den Verbindungskanal 22 und somit wieder in die Zirkulation zurückgelangt. Die im Zyklon 40 von den Feststoffen befreite gasförmige Komponente wird von einem zentralen Aufstrom erfasst und durch ein Tauchrohr 56 in einen Zyklonauslasskanal 58 geführt, über den sie durch ein Ventil 60 kontrolliert in den Verbindungskanal 22 zurückgeführt wird.

## Patentansprüche

1. Verfahren zur Reinigung von Abgasen aus einer Müllverbrennungsanlage mittels eines Sorptionsverfahrens in einer zirkulierenden Wirbelschicht, **dadurch gekennzeichnet, dass** der Massenstrom des frischen zugeführten Sorptionsmittels in Abhängigkeit der Konzentration von frischem Sorptionsmittel und/oder mindestens einem sorbierten Schadstoff im rezirkulierten Feststoff geregelt wird.

2. Verfahren nach Anspruch 1, **dadurch gekennzeichnet, dass** die Konzentration des frischen Sorptionsmittels und/oder des mindestens einen sorbierten Schadstoffs im rezirkulierten Feststoff im Wesentlichen kontinuierlich bestimmt wird.

3. Verfahren nach Anspruch 2, **dadurch gekennzeichnet, dass** die Bestimmung mittels eines Fourier-Transform-Nahinfrarot-Spektrometers durchgeführt wird.

4. Verfahren nach Anspruch 2 oder 3, **dadurch gekennzeichnet, dass** die Konzentration von Chlorid und wahlweise von frischem Sorptionsmittel im rezirkulierten Feststoff bestimmt wird.

5. Verfahren nach einem der Ansprüche 2 bis 4, **dadurch gekennzeichnet, dass** die Bestimmung anhand einer mittels eines Zyklons aus der Zirkulation entnommenen Feststoffprobe durchgeführt wird.

6. Verfahren nach einem der vorhergehenden Ansprüche, **dadurch gekennzeichnet, dass** auch der Massenstrom des aus der Zirkulation ausgetragenen Feststoffs in Abhängigkeit der Konzentration von frischem Sorptionsmittel und/oder mindestens einem sorbierten Schadstoff im rezirkulierten Feststoff geregelt wird.

7. Verfahren nach einem der vorhergehenden Ansprüche, **dadurch gekennzeichnet, dass** als Sorptionsmittel Kalkhydrat verwendet wird.

8. Verfahren nach einem der vorhergehenden Ansprüche, **dadurch gekennzeichnet, dass** der Massenstrom des zugeführten frischen Sorptionsmittels und wahlweise der Massenstrom an aus der Zirkulation ausgetragenem Feststoff auch in Abhängigkeit der Konzentration von HCl und/oder SO₂ im Rohgas und im Reingas geregelt wird.

9. Abgasreinigungsanlage zur Reinigung von Abgasen aus einer Müllverbrennungsanlage mittels eines Sorptionsverfahrens in einer zirkulierenden Wirbelschicht mit einem Wirbelschichtreaktor (14) und Mitteln (20) zum Rückführen von Feststoff in den Wirbelschichtreaktor, **dadurch gekennzeichnet, dass** sie zudem Mittel zur Regulierung der Zuführung von frischem Sorptionsmittel in Abhängigkeit der Konzentration von frischem Sorptionsmittel und/oder mindestens einem sorbierten Schadstoff im rezirkulierten Feststoff aufweist.

10. Abgasreinigungsanlage nach Anspruch 9, **dadurch gekennzeichnet, dass** sie eine Analysevorrichtung (34) zur Bestimmung der Konzentration von frischem Sorptionsmittel und/oder mindestens einem sorbierten Schadstoff im rezirkulierten Feststoff aufweist.

11. Abgasreinigungsanlage nach Anspruch 9 oder 10, **dadurch gekennzeichnet, dass** die Analysevorrichtung (34) ein Fourier-Transform-Nahinfrarot-Spektrometer ist.

12. Abgasreinigungsanlage nach einem der Ansprüche 9 bis 11, **dadurch gekennzeichnet, dass** sie einen Zyklon (40) zur Entnahme von Proben des rezirkulierten Feststoffes für die Bestimmung der Konzentration von frischem Sorptionsmittel und/oder mindestens einem sorbierten Schadstoff aufweist.

## Claims

1. A method for purifying exhaust gases from a waste incineration plant by means of a sorption method in a circulating fluidized bed, wherein the mass flow of the supplied fresh sorbent is regulated as a function of the concentration of fresh sorbent and/or at least one sorbed pollutant in the recirculated solid matter.

2. The method as claimed in claim 1, wherein the concentration of the fresh sorbent and/or of the at least one sorbed pollutant in the recirculated solid matter is determined in a substantially continuous manner.

3. The method as claimed in claim 2, wherein the determination is carried out by means of a Fourier Transform near-infrared spectrometer.

4. The method as claimed in claim 2 or 3, wherein the concentration of chloride and optionally of fresh sorbent is determined in the recirculated solid matter.

5. The method as claimed in one of claims 2 to 4, wherein the determination is carried out using a sample of solid matter withdrawn from the circulation by means of a cyclone.

6. The method as claimed in one of the preceding claims, wherein also the mass flow of the solid matter discharged from the circulation is regulated as a function of the concentration of fresh sorbent and/or at least one sorbed pollutant in the recirculated solid matter.

7. The method as claimed in one of the preceding claims, wherein hydrated lime is used as sorbent.

8. The method as claimed in one of the preceding claims, wherein the mass flow of the supplied fresh sorbent and optionally the mass flow of solid matter discharged from the circulation is also regulated as a function of the concentration of HCl and/or SO₂ in the raw gas and in the pure gas.

9. An exhaust gas purification system for the purification of exhaust gases from a waste incineration plant by means of a sorption method in a circulating fluidized bed using a fluidized bed reactor (14) and means (20) for returning solid matter to the fluidized bed reactor, wherein it additionally comprises means for regulating the supply of fresh sorbent as a function of the concentration of fresh sorbent and/or at least one sorbed pollutant in the recirculated solid matter.

10. The exhaust gas purification system as claimed in claim 9, wherein it comprises an analysis device (34) for determining the concentration of fresh sorbent and/or at least one sorbed pollutant in the recirculated solid matter.

11. The exhaust gas purification system as claimed in claim 9 or 10, wherein the analysis device (34) is a Fourier Transform near-infrared spectrometer.

12. The exhaust gas purification system as claimed in one of claims 9 to 11, wherein it comprises a cyclone (40) for withdrawing samples of the recirculated solid matter for determining the concentration of fresh sorbent and/or at least one sorbed pollutant.

## Revendications

1. Procédé pour l'épuration de gaz d'échappement d'une installation d'incinération de déchets au moyen d'un procédé de sorption dans un lit fluidisé circulant, **caractérisé en ce que** l'on régule le flux massique de l'agent de sorption frais ajouté en fonction de la concentration en agent de sorption frais et/ou en au moins un polluant sorbé dans la matière solide en recirculation.

2. Procédé selon la revendication 1, **caractérisé en ce que** l'on détermine en mode essentiellement continu la concentration en agent de sorption frais et/ou en ledit au moins un polluant sorbé dans la matière solide en recirculation.

3. Procédé selon la revendication 2, **caractérisé en ce que** l'on effectue la détermination au moyen d'un spectromètre proche infrarouge à transformée de Fourier.

4. Procédé selon la revendication 2 ou 3, **caractérisé en ce que** l'on détermine la concentration en chlorure et au choix en agent de sorption frais dans la matière solide en recirculation.

5. Procédé selon l'une quelconque des revendications 2 à 4, **caractérisé en ce que** l'on effectue la détermination à l'aide d'un échantillon de matière solide prélevé hors de la circulation au moyen d'un cyclone.

6. Procédé selon l'une quelconque des revendications précédentes, **caractérisé en ce que** l'on régule aussi le flux massique de la matière solide extraite de la circulation en fonction de la concentration d'agent en sorption frais et/ou en au moins un polluant sorbé dans la matière solide en recirculation.

7. Procédé selon l'une quelconque des revendications précédentes, **caractérisé en ce que** l'on utilise comme agent de sorption de l'hydroxyde de calcium.

8. Procédé selon l'une quelconque des revendications précédentes, **caractérisé en ce que** l'on régule le flux massique de l'agent de sorption frais ajouté et au choix le flux massique de matière solide extraite de la circulation également en fonction de la concentration en HCl et/ou en SO₂ dans le gaz brut et dans le gaz épuré.

9. Installation d'épuration de gaz d'échappement pour l'épuration de gaz d'échappement d'une installation d'incinération de déchets au moyen d'un procédé de sorption dans un lit fluidisé circulant avec un réacteur à lit fluidisé (14) et des moyens (20) pour le recyclage de matière solide dans le réacteur à lit fluidisé, **caractérisée en ce qu'**elle présente en outre des moyens pour réguler l'ajout d'agent de sorption frais en fonction de la concentration en agent de sorption frais et/ou en au moins un polluant sorbé dans la matière solide en recirculation.

10. Installation d'épuration de gaz d'échappement selon la revendication 9, **caractérisée en ce qu'**elle présente un dispositif d'analyse (34) pour la détermination de la concentration en agent de sorption frais et/ou en au moins un polluant sorbé dans la matière solide en recirculation.

11. Installation d'épuration de gaz d'échappement selon la revendication 9 ou 10, **caractérisée en ce que** le dispositif d'analyse (34) est un spectromètre proche infrarouge à transformée de Fourier.

12. Installation d'épuration de gaz d'échappement selon l'une quelconque des revendications 9 à 11, **caractérisée en ce qu'**elle présente un cyclone (40) pour le prélèvement d'échantillons de la matière solide en recirculation en vue de la détermination de la concentration en agent de sorption frais et/ou en au moins un polluant sorbé.
